# EUROPEAN PATENT APPLICATION

(11) **EP 4 836 147 A1**
(43) Date of publication of application: **04.11.2026**
(21) Application number: 25814185.2
(22) Date of filing: 18.02.2025
(51) Int. Cl.: H01M 50/289

(54) **BATTERY PACK AND ENERGY STORAGE DEVICE**

(30) Priority: 31.05.2024 CN 202421235289 U
(71) Applicant: Huawei Digital Power Technologies Co., Ltd., Shenzhen, Guangdong 518043 (CN)
(72) Inventor: LUO, Yingjie, Shenzhen, Guangdong 518043 (CN); SHEN, Bingjie, Shenzhen, Guangdong 518043 (CN); ZHANG, Kai, Shenzhen, Guangdong 518043 (CN); WANG, Jiahao, Shenzhen, Guangdong 518043 (CN); MA, Jianzhen, Shenzhen, Guangdong 518043 (CN)
(74) Representative: Huawei European IPR
(86) International application number: PCT/CN2025/077796
(87) International publication number: WO 2025/246461

(57) **Abstract**

Embodiments of this application provide a battery pack and an energy storage apparatus. The battery pack includes a housing, and an isolation member, a battery module, and a battery management unit that are built in the housing. The battery management unit is disposed on the isolation member. The isolation member is fastened in the housing and separates space in the housing into a battery compartment and a power distribution compartment that are distributed in a first direction. The battery management unit is located in the power distribution compartment, the battery module is located in the battery compartment, and the battery management unit is electrically connected to the battery module. According to this application, separation between the battery compartment and the power distribution compartment can be achieved, to suppress condensation caused by moisture cross-flow, to reduce thermal effect of a board on the battery compartment, and improve battery temperature consistency at end portions of the module. A compartment separation partition plate structure is designed, so that a compartment separation partition plate integrates a BMU mounting function, and quick mounting can be implemented in a snap-fit manner. In a production process, pre-assembly can be performed on a sub-line, and then an assembly is mounted in a PACK, so that assembly and replacement efficiency is improved.

## Description

This application claims priority to Chinese Patent Application No. 202421235289.0, filed with the China National Intellectual Property Administration on May 31, 2024 and entitled "BATTERY PACK AND ENERGY STORAGE APPARATUS", which is incorporated herein by reference in its entirety.

### TECHNICAL FIELD

This application relates to the field of battery technologies, and in particular, to a battery pack and an energy storage apparatus.

### BACKGROUND

In a battery pack in the conventional technology, an electronic component such as a battery management unit, and a battery module are both assembled in a housing of the battery pack. Because most space in the housing is occupied by the battery module, space in the housing for mounting of the electronic component such as the battery management unit is narrow. Consequently, it is difficult to assemble the electronic component such as the battery management unit, and it is difficult to properly set a location layout of the electronic component such as the battery management unit. Because it is difficult to properly set the location layout of the electronic component, when the battery pack operates, a temperature of a cell that is of the battery module and that is close to the battery management unit is higher than that of a cell at another location due to thermal effect of the battery management unit on an adjacent cell. Consequently, temperature consistency of the cells in the battery pack is reduced.

### SUMMARY

Embodiments of this application provide a battery pack and an energy storage apparatus, to resolve a problem of low temperature consistency of cells in the battery pack.

According to a first aspect, an embodiment of this application provides a battery pack. The battery pack includes a housing, and an isolation member, a battery module, and a battery management unit that are built in the housing. The battery management unit is disposed on the isolation member. The isolation member is fastened in the housing and separates space in the housing into a battery compartment and a power distribution compartment that are distributed in a first direction. The battery management unit is located in the power distribution compartment, the battery module is located in the battery compartment, and the battery management unit is electrically connected to the battery module.

In this embodiment, an electronic component such as the battery management unit may be first mounted on the isolation member to form an integrated module structure, and then the module structure is fastened as a whole to the housing, so that assembly difficulty can be effectively reduced, and assembly convenience can be improved. In addition, because the battery management unit and the isolation member may be first assembled outside the housing, a location layout of the battery management unit is easier to achieve, so that a location layout of the electronic component such as the battery management unit is more proper. In this embodiment, locations of the isolation member, the battery management unit, and the like are properly arranged, so that the battery module and the battery management unit are assembled in different compartments by using the isolation member. Therefore, impact of heat, generated when the battery management unit operates, on the battery module can be effectively reduced. Thermal effect of the battery management unit and the like on a cell that is of the battery module and that is adjacent to the battery management unit is reduced, to improve temperature consistency of the cells of the battery module. In addition, because the battery compartment and the power distribution compartment are separated by the isolation member, even if condensation occurs in the battery module in the battery compartment due to a large heat capacity, the condensation can be effectively prevented from flowing to the power distribution compartment, so that a risk of an electric spark caused by the battery management unit in the power distribution compartment being in contact with the condensation can be effectively reduced. In addition, the isolation member is disposed, so that heat transfer between the battery compartment and the power distribution compartment can be effectively blocked. Therefore, with small impact of a temperature in the battery compartment on a temperature in the power distribution compartment, a temperature change in the power distribution compartment does not lag behind and does not cause a temperature difference with a surrounding temperature, so that a risk of the condensation generated on the battery management unit in the power distribution compartment can be reduced. In addition, when the cell of the battery module undergoes thermal runaway, and an electrolyte is ejected, the electrolyte can be effectively prevented from being sprayed to the battery management unit due to arrangement of the isolation member, so that a risk of an electric spark of the battery management unit is effectively reduced.

In some embodiments, the isolation member includes a bottom plate and a vertical plate that is integrally formed with the bottom plate. The vertical plate separates the space in the housing into the battery compartment and the power distribution compartment. The bottom plate is fastened to a base of the housing. The bottom plate is located on a side that is of the vertical plate and that is away from the battery module. The battery management unit is assembled on the side that is of the vertical plate and that is away from the battery module. In this embodiment, electronic components may be first integrated and mounted on the bottom plate and the vertical plate to form an integrated module structure, and then the module structure is fastened as a whole to the housing, so that assembly difficulty can be effectively reduced, and assembly convenience can be improved. In addition, because the bottom plate is located on the side that is of the vertical plate and that is away from the battery module, some electronic components can be integrated and mounted on the bottom plate, so that a capability of integrating electronic components on the isolation member is enhanced.

In some embodiments, an assembly recess is disposed on a side that is of the isolation member and that is away from the battery module, and the battery management unit is mounted in the assembly recess. In this embodiment, the assembly recess is disposed on the vertical plate, so that a mounting position can be reserved for assembly of the battery management unit, to facilitate an integration design. In addition, the battery management unit is mounted in the assembly recess, so that stability of a connection between the battery management unit and the isolation member can be effectively ensured.

In some embodiments, the battery management unit includes a bottom housing, a cover body, and a sampling board. The cover body and the bottom housing are connected in a snap-fit manner and enclose an accommodation cavity. The sampling board is located in the accommodation cavity. The bottom housing is disposed in the assembly recess. The cover body is connected to the isolation member in a snap-fit manner. In this embodiment, because the bottom housing is connected to the cover body in a snap-fit manner, convenience of a connection between the bottom housing and the cover body can be improved. The sampling board is disposed in the accommodation cavity enclosed by the bottom housing and the cover body, so that proper protection for the sampling board can be improved, to prevent the sampling board from being short-circuited with another electronic component, for example, a conducting wire.

In some embodiments, the battery pack further includes a flexible circuit board and a first connection terminal. The flexible circuit board is located between the battery module and a top wall of the housing and is electrically connected to a cell of the battery module. The flexible circuit board extends in the first direction, a part of the flexible circuit board extends into the power distribution compartment, and the first connection terminal is connected to the part that is of the flexible circuit board and that extends into the power distribution compartment. The battery management unit further includes a second connection terminal connected to the sampling board, and the first connection terminal is connected to the second connection terminal. In this embodiment, the flexible circuit board is located between the battery module and the top wall of the housing, to facilitate electrical connection to the cell of the battery module. The flexible circuit board extends in the first direction, to facilitate convenient electrical connection to all cells of the battery module. In addition, a manner in which the first connection terminal and the second connection terminal are connected to the flexible circuit board and the sampling board can effectively reduce connection difficulty and improve connection efficiency.

In some embodiments, the battery pack further includes a positive external interface and a negative external interface. The battery pack further includes a first conducting wire configured to connect the positive external interface to a positive connector of the battery module, and a second conducting wire configured to connect the negative external interface to a negative connector of the battery module. The first conducting wire and the second conducting wire are disposed on the isolation member and are located in the power distribution compartment. In this embodiment, both the first conducting wire and the second conducting wire are disposed in the power distribution compartment. Because the isolation member has heat insulation effect on the power distribution compartment and the battery compartment, a risk of an electric spark caused by condensation generated on the first conducting wire and the second conducting wire can be effectively reduced.

In some embodiments, the isolation member includes a bottom plate and a vertical plate integrally formed with the bottom plate. The vertical plate separates the space in the housing into the battery compartment and the power distribution compartment. The bottom plate is fastened to a base of the housing. The bottom plate is located on a side that is of the vertical plate and that is away from the battery module. The second conducting wire includes a first part extending in a width direction of the battery pack and a second part extending from an end portion of the first part in a height direction of the battery pack. The first part is disposed on the bottom plate, and the second part is disposed on the vertical plate. In this embodiment, the first part of the second conducting wire is disposed on the bottom plate, and a length direction of the bottom plate is the width direction of the battery pack, that is, an extension direction of the first part, so that the first part with a long span can be properly disposed on the bottom plate. The second part is connected to the end portion of the first part, and an extension direction of the second part is the height direction of the battery pack, so that the second part can extend to the negative connector of the battery module to be connected to the negative connector of the battery module. This design allows for proper wiring of the second conducting wire with a long length.

In some embodiments, wire grooves are disposed at two ends of the vertical plate in the width direction of the battery pack, a wire groove is disposed on the bottom plate, the first part passes through the wire groove on the bottom plate, and the second part passes through the wire groove on the vertical plate. In this embodiment, the wire grooves are disposed, so that both the first part and the second part can be stably disposed on the isolation member. This is also conducive to an integrated design of the second conducting wire and the isolation member.

In some embodiments, the battery pack further includes a fuse disposed on the isolation member, and the fuse is connected to the first conducting wire or the second conducting wire. In this embodiment, because the fuse is connected to the first conducting wire or the second conducting wire, in a scenario in which a system is faulty, or the battery pack itself is faulty (for example, short-circuited), the fuse may be used to implement rapid disconnection, to ensure safety of the battery pack in a whole life cycle including manufacturing, transportation, compartment storage, maintenance, and operation.

In some embodiments, the battery pack further includes a power board configured to control the battery module, and the power board is disposed in the power distribution compartment. In this embodiment, the battery module and the power board are assembled in different compartments by using the isolation member, so that impact of heat, generated when the power board or the like operates, on the battery module can be effectively reduced. Thermal effect of the power board on a cell that is of the battery module and that is adjacent to the power board is reduced, to improve temperature consistency of the cells of the battery module. In addition, when the cell of the battery module undergoes thermal runaway, and an electrolyte is ejected, the electrolyte can be effectively prevented from being sprayed to the power board due to arrangement of the isolation member, so that a risk of an electric spark of the power board is effectively reduced.

In some embodiments, the housing includes a front wall and a rear wall that are opposite to each other in the first direction, the isolation member is located between the battery module and the front wall, and the power board is disposed on a side that is of the front wall and that faces the isolation member. In this embodiment, because the power board is disposed on the side that is of the front wall and that faces the isolation member, heat of the power board can be dissipated as much as possible through the front wall. In addition, through blocking of the isolation member, impact of heat generated by the power board on the battery module in the battery compartment can be further reduced.

In some embodiments, the battery module includes a plurality of cells arranged in the first direction, the isolation member is in a strip shape, the isolation member extends in a width direction of the battery pack, and the first direction is consistent with a length direction of the battery pack. In this embodiment, because an arrangement direction of the plurality of cells of the battery module is the first direction, and a length direction of the isolation member is the same as the width direction of the battery pack, a mounting location of the battery management unit is located at an end side of the arrangement direction of the plurality of cells of the battery module, so that a location of the battery management unit can be flexibly and conveniently adjusted, and design optimization and iterative evolution of the battery module in the first direction can be supported. In addition, because the isolation member is in the strip shape, and the isolation member extends in the width direction of the battery pack, the isolation member can be prevented from occupying larger space in the first direction while isolating the battery module from the power board and the battery management unit as much as possible.

In some embodiments, in the width direction of the battery pack, two ends of the isolation member protrude from two ends of the battery module. In this embodiment, because two ends of the isolation member in the extension direction protrude from two ends of the battery module in the width direction of the battery pack, in the width direction of the battery pack, all positions of the battery module can be effectively separated from an electronic component in the power distribution compartment by using the isolation member, to reduce impact on the battery module caused when the electronic component in the power distribution compartment generates heat. In addition, heat transfer from the battery compartment to the power distribution compartment can also be effectively reduced to prevent generation of condensation in the power distribution compartment.

In some embodiments, a spacing is reserved between the isolation member and a top wall of the housing. The battery pack further includes a foam strip. In a height direction of the battery pack, the foam strip is disposed in a spacing area between the top wall of the housing and the isolation member, and the height direction of the battery pack is perpendicular to the first direction. In this embodiment, because the foam strip is disposed between the battery module and the top wall of the housing, the electrolyte sprayed out from the cell of the battery module may be effectively prevented from being sprayed to the power distribution compartment, so that an electric spark of the electronic component (such as the power board, the battery management unit, or a copper bar) located in the power distribution compartment can be avoided.

According to a second aspect, an embodiment of this application provides an energy storage apparatus, including a cabinet and a plurality of battery packs according to any one of the first aspect, where the plurality of battery packs are stacked in the cabinet.

### BRIEF DESCRIPTION OF DRAWINGS

To describe the technical solutions in embodiments of this application or in the conventional technology more clearly, the following briefly describes the accompanying drawings for describing embodiments or the conventional technology.
FIG. 1 is a diagram of a simple structure of an energy storage apparatus according to an embodiment of this application;
FIG. 2 is a diagram of a structure of a battery pack according to an embodiment of this application;
FIG. 3 is a diagram of a part of a structure of the battery pack in the embodiment in FIG. 2 obtained after a part of a housing body is hidden;
FIG. 4 is a diagram of a part of a structure of the battery pack in the embodiment in FIG. 2 obtained after a part of the structure is hidden;
FIG. 5 is a diagram of a mounting location of a power board of the battery pack in FIG. 2;
FIG. 6 is a diagram of a structure of an isolation member of the battery pack in FIG. 2;
FIG. 7 is a diagram of a structure of assembling an isolation member and a battery management unit of the battery pack in FIG. 2;
FIG. 8 is a diagram of a structure of a battery management unit of the battery pack in the embodiment in FIG. 2;
FIG. 9 is a schematic exploded view of the battery management unit in FIG. 8;
FIG. 10 is a partial enlarged diagram at position A in FIG. 3; and
FIG. 11 is a partial enlarged diagram at position B in FIG. 3.

Reference numerals:
L: first direction; X: length direction of a battery pack; Y: length direction of the battery pack; Z: length direction of the battery pack;
1: energy storage apparatus; 2: cabinet; 3: battery pack; 4: signal interface; 5: positive external interface; 6: negative external interface; 7: busbar; 8: module structure;
10: housing; 101: battery compartment; 102: power distribution compartment; 11: base; 12: housing body; 121: front wall; 1211: heat dissipation fin; 122: rear wall; 123: side wall; 124: top wall;
20: battery module; 21: cell; 22: positive connector; 23: negative connector; 24: cable tie; 25: end plate;
30: battery management unit; 31: snap-fit portion; 32: bottom housing; 321: snap-fit; 33: cover body; 331: snap-fit slot; 34: sampling board; 35: accommodation cavity; 36: second connection terminal;
40: power board; 41: mounting cavity; 42: cover plate;
50: flexible circuit board; 51: first connection terminal;
60: isolation member; 61: bottom plate; 62: vertical plate; 621: assembly recess; 622: wire harness clip; 63: wire groove; 64: mounting recess; 65: mating portion; 66: fastening hole;
71: first conducting wire; 72: second conducting wire; 721: first part: 722: second part;
80: fuse;
90: foam strip.

### DESCRIPTION OF EMBODIMENTS

The following first explains some terms in embodiments of this application.

In this specification, claims, and accompanying drawings of embodiments of this application, the terms "first", "second", "third", "fourth", and the like are intended to distinguish between similar objects but do not necessarily indicate a specific order or sequence. It should be understood that data used in such a way is interchangeable in proper circumstances, so that embodiments of this application described herein can be, for example, implemented in an order other than the order illustrated or described herein. In addition, the terms "include", "have", and any other variants thereof are intended to cover the non-exclusive inclusion. For example, a process, method, system, product, or device that includes a series of steps or units is not necessarily limited to those expressly listed steps or units, but may include other steps or units not expressly listed or inherent to such a process, method, product, or device.

In this specification, terms such as "perpendicular" and "parallel" are explained.

Perpendicular: "Perpendicular" defined in this application is not limited to an absolute perpendicular intersection (an included angle is 90 degrees) relationship. A non-absolute perpendicular intersection relationship caused by impact of factors such as an assembly tolerance, a design tolerance, and structural flatness is allowed. An error within a small angle range is allowed. For example, an intersection relationship within an assembly error range of 80 degrees to 100 degrees may be understood as a perpendicular relationship.

Parallel: "Parallel" defined in this application is not limited to absolute parallelism. The definition of "parallel" may be understood as basic parallelism. Cases of non-absolute parallelism caused by factors such as an assembly tolerance, a design tolerance, and a structural flatness are allowed. In these cases, a sliding mating portion and a first door plate are not absolutely parallel. However, in this application, the sliding mating portion and the first door plate in these cases are also defined as being parallel.

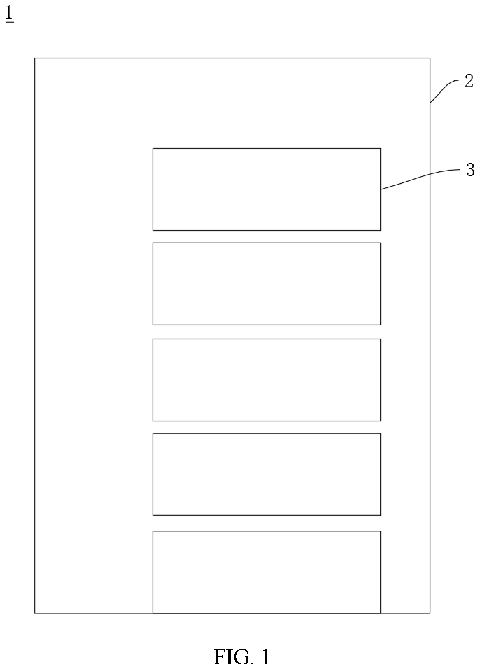

FIG. 1 is a diagram of a simple structure of an energy storage apparatus 1 according to an embodiment of this application.

Refer to FIG. 1. The energy storage apparatus 1 includes a cabinet 2 and a plurality of battery packs 3 disposed in the cabinet 2, and the plurality of battery packs 3 are stacked in the cabinet 2. The plurality of battery packs 3 may store or output electric energy.

For ease of understanding the energy storage apparatus 1 provided in this embodiment of this application, the following describes an application scenario of the energy storage apparatus 1. The energy storage apparatus 1 is a system that can store electric energy by using a specific medium and release the stored energy to generate electricity when necessary. The energy storage apparatus 1 may be used as a load balancing apparatus and a backup power supply in a scenario such as a daily home living environment, an industrial and commercial park, a large ground power supply station, or a photovoltaic plus storage system. Application of the energy storage apparatus 1 is briefly described by using a scenario of the photovoltaic plus storage system as an example. The photovoltaic plus storage system may usually include a photovoltaic module, a power conversion system, the energy storage apparatus 1, and a grid-connected inverter. The photovoltaic module may convert light energy into electric energy in a form of a direct current, and output the electric energy to the grid-connected inverter. The grid-connected inverter may convert the electric energy in the form of the direct current into electric energy in a form of an alternating current, and transmit the electric energy in the form of the alternating current to a power grid, to implement grid-connection of the photovoltaic plus storage system.

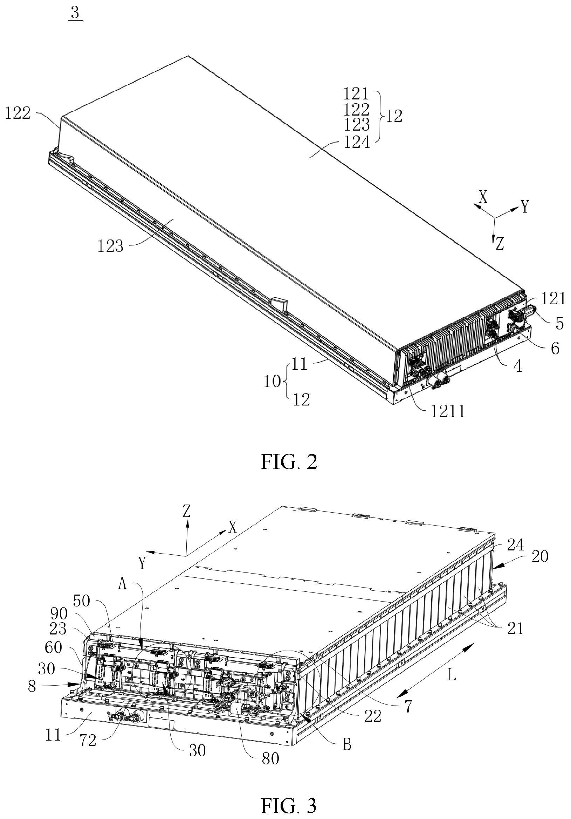

FIG. 2 is a diagram of a structure of a battery pack 3 according to an embodiment of this application. FIG. 3 is a diagram of a part of a structure of the battery pack 3 in the embodiment in FIG. 2 obtained after a part of a housing body 12 is hidden. The battery pack 3 in the embodiment in FIG. 2 may be used not only in the energy storage apparatus 1 in the embodiment in FIG. 1 but also in the in-vehicle field or another field in which the battery pack 3 needs to be used.

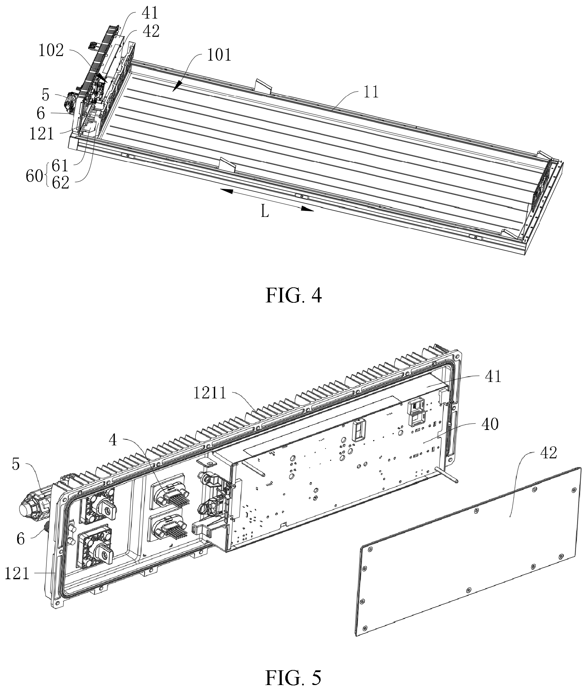

Refer to FIG. 2 and FIG. 3. The battery pack 3 includes a housing 10, and a battery module 20, a battery management unit 30, and a power board 40 that are accommodated in the housing 10 (as shown in FIG. 5).

In some implementations, the housing 10 includes a base 11 and a housing body 12 connected to the base 11, and the housing body 12 may be configured to accommodate the battery module 20 after being connected to the base 11.

The housing body 12 includes a front wall 121 and a rear wall 122 that are opposite to each other in a length direction Z of the battery pack 3, two side walls 123 that are opposite to each other in a width direction of the battery pack 3, and a top wall 124 that is opposite to the base 11 in a height direction of the battery pack 3. The two side walls 123, the front wall 121, and the rear wall 122 are connected between the top wall 124 and the base 11, and jointly enclose an accommodating cavity. The accommodating cavity may be used to accommodate the battery module 20, the battery management unit 30, and the power board 40.

The base 11 includes a bottom plate 61 and side plates connected to a periphery of the bottom plate 61. The side plates and the bottom plate 61 enclose a limiting storage recess. The battery module 20 is assembled into the limiting storage recess.

In some implementations, there are a plurality of battery modules 20, and the plurality of battery modules 20 are disposed side by side in the housing 10.

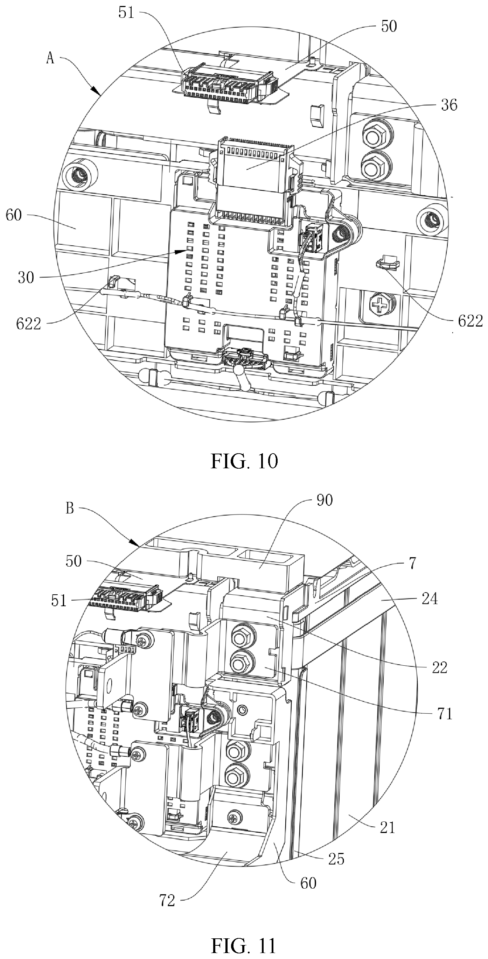

The battery module 20 includes a plurality of arranged cells 21, end plates 25 (as shown in FIG. 11) bound to two ends of an arrangement direction of the plurality of cells 21, and a cable tie 24, where the arrangement direction of the plurality of cells 21 is the length direction Z of the battery pack 3. The plurality of cells 21 may be bound together by using the end plates 25 at the two ends and the cable tie 24, to facilitate transportation and reduce a gap between adjacent cells 21, so as to improve energy density.

In some implementations, pressure relief valves of the plurality of cells 21 all face the top wall 124.

In some implementations, the battery management unit (Battery Management Unit, BMU) 30 is configured to monitor a running status of a battery, to ensure safe and stable running of the battery. For example, the battery management unit 30 detects an exception in a timely manner by monitoring key parameters such as voltages, currents, and temperatures of the cells 21 of the battery module 20, to ensure safe running of the battery.

In some implementations, the battery pack 3 further includes a flexible circuit board (Flexible Printed Circuit, FPC) 50. The flexible circuit board 50 is electrically connected between the plurality of cells 21 of the battery module 20 and the battery management unit 30. The flexible circuit board 50 is configured to measure running statuses of the plurality of cells 21 of the battery module 20 and feed back the running statuses to the battery management unit 30, for example, transmit measured key parameters such as voltages, currents, and temperatures of the plurality of cells 21 to the battery management unit 30.

The flexible circuit board 50 extends in the length direction Z of the battery pack 3, so that one flexible circuit board 50 may be correspondingly disposed in each battery module 20. The flexible circuit board 50 may be connected to all the cells 21 of the battery module 20, so that statuses of all the cells 21 of the battery module 20 can be detected.

Similarly, one flexible circuit board 50 may be connected to only one battery management unit 30, and one battery management unit 30 may monitor a running status of only one battery module 20. Because the battery pack 3 may include a plurality of battery modules 20, a plurality of battery management units 30 and a plurality of flexible circuit boards 50 may be correspondingly disposed in the battery pack 3.

In some implementations, the flexible circuit board 50 is disposed between the top wall 124 and the battery module 20.

In some implementations, the power board 40 is configured to control the battery module 20, for example, is responsible for active equalization and power conversion of the battery module 20, to perform charging and discharging management, and ensure safe and efficient running of the battery module 20.

In some implementations, the battery pack 3 further includes a signal interface 4. The signal interface 4 is disposed on the front wall 121. Both the battery management unit 30 and the power board 40 are connected to the signal interface 4 through conducting wires, to facilitate transmission of a signal obtained by the battery management unit 30 and the power board 40 of the battery pack 3 to the outside or receiving of an external signal.

FIG. 4 is a diagram of a part of a structure of the battery pack 3 in the embodiment in FIG. 2 obtained after a part of the structure is hidden.

Refer to FIG. 2 to FIG. 4. In some embodiments, the battery pack 3 further includes an isolation member 60. The battery management unit 30 and the isolation member 60 are assembled into an integrated module structure 8. The module structure 8 is disposed in the housing 10. In this embodiment, an electronic component such as the battery management unit 30 may be first integrated and mounted on the isolation member 60 to form the integrated module structure 8, and then the module structure 8 is fastened as a whole to the housing 10, so that assembly difficulty can be effectively reduced, and assembly convenience can be improved. Because the battery management unit 30 and the isolation member 60 may be first assembled outside the housing 10, a location layout of the battery management unit 30 is easier to achieve, so that a location layout of the electronic component such as the battery management unit 30 is more proper. Locations of the isolation member 60, the battery management unit 30, and the like are properly arranged, so that the battery module 20 and the battery management unit 30 can be assembled in different compartments by using the isolation member 60.

In some embodiments, the isolation member 60 separates the housing 10 into a battery compartment 101 and a power distribution compartment 102 that are distributed in a first direction L. The battery compartment 101 is mainly used for placement of the battery module 20, and the power distribution compartment 102 is mainly used for placement of electronic components such as the battery management unit 30 and the power board 40. In this embodiment, the battery module 20, the power board 40, and the battery management unit 30 are assembled in different compartments by using the isolation member 60, so that impact of heat, generated when the battery management unit 30 and the power board 40 operate, on the battery module 20 can be effectively reduced. Thermal effect of the power board 40, the battery management unit 30, and the like on a cell 21 that is of the battery module 20 and that is adjacent to the power board 40, the battery management unit 30, and the like is reduced, to improve temperature consistency of the cells 21 of the battery module 20. In addition, because the battery compartment 101 and the power distribution compartment 102 are separated by the isolation member 60, even if condensation occurs in the battery module 20 in the battery compartment 101 due to a large heat capacity, the condensation can be effectively prevented from flowing to the power distribution compartment 102, so that an electric spark caused by an electronic component (such as the battery management unit, the power board 40, or a connecting conducting wire) in the power distribution compartment 102 being in contact with the condensation can be effectively avoided. In addition, the isolation member 60 is disposed, so that heat transfer between the battery compartment 101 and the power distribution compartment 102 can be effectively blocked. Therefore, with small impact of a temperature in the battery compartment 101 on a temperature in the power distribution compartment 102, a temperature change in the power distribution compartment 102 does not lag behind and does not cause a temperature difference with a surrounding temperature, so that a risk of the condensation generated on the electronic component in the power distribution compartment 102 can be reduced. In addition, when the cell 21 of the battery module 20 undergoes thermal runaway, and an electrolyte is ejected, the electrolyte can be effectively prevented from being sprayed to the power board 40 or the battery management unit 30 due to arrangement of the isolation member 60, so that a risk of an electric spark of the power board 40 or the battery management unit 30 is effectively reduced.

The isolation member 60 is made of an insulation material, so that through separation of the isolation member 60, a creepage distance between the battery module 20 and the electronic component disposed in the power distribution compartment 102 can be increased, and an electric spark between the cell 21 of the battery module 20 and the electronic component can be effectively prevented.

The isolation member 60 is made of a material with a low thermal conductivity. Because the isolation member 60 is made of the material with a low thermal conductivity, the isolation member 60 can effectively block heat transfer between the power distribution compartment 102 and the battery compartment 101, and effectively block heat transfer from the battery management unit 30 and the power board 40 to the battery module 20, so that thermal effect on the battery module 20 caused when the battery management unit 30 and the power board 40 operate and generate heat can be effectively reduced.

In some implementations, a thermal conductivity of the isolation member 60 is less than 0.3 W/(m*K). For example, the isolation member 60 may be made of a material such as an engineering plastic PC, ABS, or PA.

It may be understood that in some other implementations, the isolation member 60 may alternatively be formed by coating a surface of a metal material with a material with a heat insulation property and a low thermal conductivity. In this way, functions such as insulation and heat insulation can be ensured, and support strength of the isolation member 60 can also be effectively improved.

In some embodiments, the first direction L is consistent with the length direction Z of the battery pack 3. The isolation member 60 is of a strip structure, and an extension direction of the isolation member 60 is the width direction of the battery pack 3, that is, a length direction of the isolation member 60 is the width direction of the battery pack 3. It may be understood that the width direction of the battery pack 3, the length direction Z of the battery pack 3, and the height direction of the battery pack 3 are perpendicular to each other. The length direction of the isolation member 60 is the extension direction of the isolation member 60 when the isolation member 60 is in a strip shape. Because the isolation member 60 is in the strip shape, and the length direction of the isolation member 60 is the same as the width direction of the battery pack 3, the isolation member 60 can be prevented from occupying larger space in the first direction L while isolating the battery module 20 from the power board 40 and the battery management unit 30 as much as possible.

In some implementations, two ends of the isolation member 60 in the extension direction protrude from two ends of the battery module 20 in the width direction of the battery pack 3. Because two ends of the isolation member 60 in the extension direction protrude from two ends of the battery module 20 in the width direction of the battery pack 3, in the width direction of the battery pack 3, all positions of the battery module 20 can be effectively separated from an electronic component in the power distribution compartment 102 by using the isolation member 60, to reduce impact on the battery module 20 caused when the electronic component in the power distribution compartment 102 generates heat. In addition, heat transfer from the battery compartment 101 to the power distribution compartment 102 can also be effectively reduced to prevent generation of condensation in the power distribution compartment 102.

In addition, because a mounting location of the battery management unit 30 is located at an end side of the battery module 20 in the first direction L, the location can be flexibly and conveniently adjusted, and design optimization and iterative evolution of the battery module 20 in the first direction L can be supported.

In some implementations, in the width direction of the battery pack 3, two ends of the length of the isolation member 60 basically extend to two side walls 123 of the housing body 12, so that the battery compartment 101 and the power distribution compartment 102 are separated as much as possible, to reduce impact of the electronic component in the power distribution compartment 102 on the battery module 20.

It may be understood that in some other implementations, the first direction L may alternatively be the width direction of the battery pack 3, the height direction of the battery pack 3, or the like.

FIG. 5 is a diagram of a mounting location of the power board 40 of the battery pack 3 in FIG. 2.

Refer to FIG. 2 to FIG. 5. In some embodiments, the isolation member 60 is located between the battery module 20 and the front wall 121, and the power board 40 is disposed on a side that is of the front wall 121 and that faces the isolation member 60. In this embodiment, in the first direction L, an area between the isolation member 60 and the front wall 121 is the power distribution compartment 102. Because the power board 40 is disposed on the side that is of the front wall 121 and that faces the isolation member 60, heat of the power board 40 can be dissipated as much as possible through the front wall 121. In addition, through blocking the isolation member 60, impact of heat generated by the power board 40 on the battery module 20 in the battery compartment 101 can be further reduced.

In some implementations, heat dissipation fins 1211 are disposed on the front wall 121, and the power board 40 is disposed on the front wall 121, so that heat dissipation effect of the power board 40 can be further improved by disposing the heat dissipation fins 1211.

In some implementations, a mounting cavity 41 and a cover plate 42 for covering the mounting cavity 41 are disposed on the side that is of the front wall 121 and that faces the isolation member 60, and the power board 40 is disposed in the mounting cavity 41. After the power board 40 is assembled in the mounting cavity 41, the power board 40 may be covered in the mounting cavity 41 by using the cover plate 42. It may be understood that, power components, such as various diodes, triodes, resistors, capacitors, or inductors, may be integrated on the power board 40. Because the power board 40 is covered in the mounting cavity 41, more heat generated by the power board 40 can be dissipated through the front wall 121. In addition, because the power board 40 is covered in the mounting cavity 41, impact of the power board 40 on another electronic component in the power distribution compartment 102 can also be effectively reduced, for example, mutual impact between the power board 40 and the battery management unit 30 can be effectively reduced.

Refer to FIG. 3 and FIG. 5. In some embodiments, the battery pack 3 further includes a positive external interface 5 and a negative external interface 6 that are disposed on the front wall 121. The positive external interface 5 is connected to a positive connector 22 of the battery module 20, and the negative external interface 6 is configured to be connected to a negative connector 23 of the battery module 20. Another external interface of the battery pack 3 may be further disposed on the front wall 121, for example, an external interface connected to the power board 40 or the battery management unit 30. Because the plurality of battery packs 3 in the energy storage apparatus 1 are basically disposed in a stacked manner, the front wall 121 of the battery pack 3 is usually exposed, and the top wall 124, the base 11, and the like of the battery pack 3 are configured to abut against a base 11, a top wall 124, and the like of another battery pack 3. Therefore, the positive external interface 5 and the negative external interface 6 are disposed on the front wall 121, to facilitate a connection between the plurality of battery packs 3. In addition, electronic components such as the power board 40 and the battery management unit 30 are disposed in the power distribution compartment 102 between the isolation member 60 and the front wall 121. Because the front wall 121 is exposed, heat dissipation efficiency can be improved by using the front wall 121.

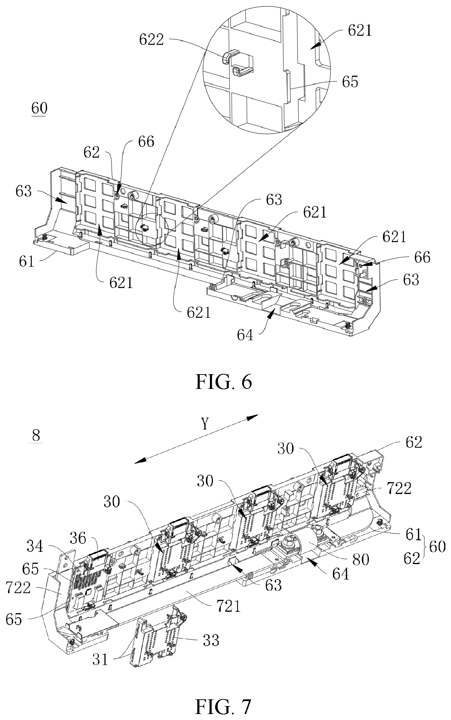

FIG. 6 is a diagram of a structure of the isolation member 60 of the battery pack 3 in FIG. 2.

Refer to FIG. 6. In some implementations, the isolation member 60 includes a bottom plate 61 and a vertical plate 62 integrally formed with the bottom plate 61. The vertical plate 62 and the bottom plate 61 are both in a strip shape, and the vertical plate 62 and the bottom plate 61 have a same length direction.

An assembly recess 621 is disposed on a side of the vertical plate 62, and the assembly recess 621 is configured to mount the battery management unit 30. It may be understood that there may be a plurality of assembly recesses 621 to assemble a plurality of battery management units 30, and the plurality of assembly recesses 621 are spaced apart in the length direction of the vertical plate 62.

A wire harness clip 622 is disposed on the side, of the vertical plate 62, on which the assembly recess 621 is disposed. There may be a plurality of wire harness clips 622. The wire harness clip 622 is configured to fasten and constrain a conducting wire, to avoid excessive disorder of the conducting wire.

A wire groove 63 for constraining a copper bar is disposed on the side, of the vertical plate 62, on which the assembly recess 621 is disposed.

In some implementations, two wire grooves 63 are disposed on the vertical plate 62, and the two wire grooves 63 are located at two end portions of the vertical plate 62 in the length direction of the vertical plate 62.

In some implementations, the bottom plate 61 and the vertical plate 62 are approximately in a perpendicular relationship. The bottom plate 61 is configured to be fastened to the base 11. For example, the bottom plate 61 may be fastened to the base 11 by using a bolt, a screw, or the like. Because the bottom plate 61 and the vertical plate 62 are approximately in a perpendicular relationship, after the bottom plate 61 is fastened to the base 11, it can be ensured that the vertical plate 62 is in a vertically placed state.

A wire groove 63 for constraining the copper bar is also provided on the bottom plate 61.

A mounting recess 64 for mounting a fuse 80 (as shown in FIG. 7) is further disposed on the bottom plate 61.

FIG. 7 is a diagram of a structure of assembling the isolation member 60 and the battery management unit 30 of the battery pack 3 in FIG. 2.

Refer to FIG. 6 and FIG. 7. In some embodiments, the battery management unit 30 is connected, in a snap-fit 321 manner, to a side that is of the isolation member 60 and that is away from the battery module 20. Because the isolation member 60 is connected to the battery management unit 30 in a snap-fit 321 manner, efficiency of a connection between the battery management unit 30 and the isolation member 60 can be improved. In addition, because the battery management unit 30 is connected to the isolation member 60, the battery management unit 30 can be first fastened to the isolation member 60, and then the isolation member 60 is assembled to the housing 10. In this way, assembly efficiency can be improved, and assembly difficulty can also be reduced.

In some implementations, the battery management unit 30 is mounted in the assembly recess 621. The battery management unit 30 is mounted in the assembly recess 621, so that stability of the connection between the battery management unit 30 and the isolation member 60 can be effectively ensured.

In some implementations, a snap-fit portion 31 is disposed on the battery management unit 30, a mating portion 65 is disposed on the isolation member 60, and the mating portion 65 is located at an edge of the assembly recess 621. After the battery management unit 30 is mounted in the assembly recess 621, the snap-fit portion 31 is snap-fitted with the mating portion 65, and the mating portion 65 may limit the snap-fit portion 31 to prevent the battery management unit 30 from being detached from the assembly recess 621.

In some implementations, a fastening hole 66 is further disposed on the isolation member 60, and the battery management unit 30 may be further fastened to the isolation member 60 in a manner in which a bolt is connected to the fastening hole 66. It may be understood that in some other implementations, the isolation member 60 and the battery management unit 30 are fastened by using both the bolt and the snap-fit 321, to improve stability of the connection between the battery management unit 30 and the isolation member 60.

In some embodiments, the vertical plate 62 is configured to separate the housing 10 to form the battery compartment 101 and the power distribution compartment 102 that are adjacent in the first direction L. The bottom plate 61 is fastened to the base 11 of the housing 10, and the bottom plate 61 is located on a side that is of the vertical plate 62 and that is away from the battery module 20. In this embodiment, the isolation member 60 is fastened to the base 11 by using the bottom plate 61, so that an assembly manner between the isolation member 60 and the base 11 is more proper. In addition, because the bottom plate 61 is located on the side that is of the vertical plate 62 and that is away from the battery module 20, some electronic components can be integrated and mounted on the bottom plate 61, so that a capability of integrating electronic components on the isolation member 60 is enhanced. The electronic components are first integrated and mounted on the bottom plate 61 and the vertical plate 62 and then are fastened as a whole to the base 11, so that assembly difficulty can be effectively reduced.

In some implementations, the battery pack 3 includes a plurality of battery management units 30, and the plurality of battery management units 30 are disposed, in a spaced manner, on the side that is of the vertical plate 62 and that is away from the battery module 20. In the first direction L, one battery management unit 30 is correspondingly disposed in each battery module 20, so that each battery module 20 can be monitored.

In some embodiments, the module structure 8 further includes a first conducting wire 71 and a second conducting wire 72. The first conducting wire 71 is connected to the positive external interface 5 and the positive connector 22 of the battery module 20, and the second conducting wire 72 is connected to the negative external interface 6 and the negative connector 23 of the battery module 20. Therefore, it can be convenient to implement a series connection or a parallel connection between adjacent battery packs 3 through the positive external interface 5 and the negative external interface 6.

In some implementations, the positive connector 22 and the negative connector 23 of the battery module 20 are located at two ends of the battery module 20 in the width direction of the battery pack 3. In other words, a distance between the positive connector 22 and the negative connector 23 of the battery module 20 is approximately the same as a size of all battery modules 20 in the width direction of the battery pack 3. To facilitate connection between the battery packs 3, the distance between the positive external interface 5 and the negative external interface 6 is usually short. Therefore, at least one of the first conducting wire 71 and the second conducting wire 72 needs to span a long path in the battery pack 3. Therefore, how to properly design and arrange the first conducting wire 71 or the second conducting wire 72 that spans the long path is also extremely important.

In some implementations, the positive external interface 5 and the negative external interface 6 are disposed at an end that is of the front wall 121 and that is close to the positive connector 22 of the battery pack 3, so that the second conducting wire 72 that connects the negative connector 23 of the battery module 20 and the negative external interface 6 needs to be disposed in the battery pack 3 across a long path.

In some implementations, both the first conducting wire 71 and the second conducting wire 72 are disposed in the power distribution compartment 102. Because the isolation member 60 has heat insulation effect on the power distribution compartment 102 and the battery compartment 101, a risk of an electric spark caused by condensation generated on the first conducting wire 71 and the second conducting wire 72 can be effectively reduced.

In some implementations, both the first conducting wire 71 and the second conducting wire 72 are disposed on the isolation member 60. A component may be isolated from the battery module 20 by using the isolation member 60, and assembly difficulty can further be reduced by first integrating and mounting the component on the isolation member 60 and then mounting the component as a whole on the base 11.

In some implementations, the first conducting wire 71 is mounted on the vertical plate 62. Because the vertical plate 62 directly faces the front wall 121, it can be convenient for the first conducting wire 71 to be connected to the positive external interface 5.

In some implementations, the second conducting wire 72 includes a first part 721 extending in the width direction of the battery pack 3 and a second part 722 extending from an end portion of the first part 721 in the height direction of the battery pack 3. The first part 721 is disposed on the bottom plate 61, and the second part 722 is disposed on the vertical plate 62. In this implementation, the first part 721 of the second conducting wire 72 is disposed on the bottom plate 61, and the length direction of the bottom plate 61 is the width direction of the battery pack 3, that is, an extension direction of the first part 721, so that the first part 721 with a long span can be properly disposed on the bottom plate 61. The second part 722 is connected to the end portion of the first part 721, and an extension direction of the second part 722 is the height direction of the battery pack 3, so that the second part 722 can extend to the negative connector 23 of the battery module 20 to be connected to the negative connector 23 of the battery module 20. The second conducting wire 72 is disposed on the bottom plate 61 and the vertical plate 62. This design allows for proper wiring of the second conducting wire 72 with a long length and can effectively avoid an electric spark of the second conducting wire 72 and another electronic component.

In some implementations, both the first conducting wire 71 and the second conducting wire 72 are copper bars. It may be understood that, the first conducting wire 71 and the second conducting wire 72 may be hard copper bars or may be soft copper bars. The first conducting wire 71 and the second conducting wire 72 are copper bars.

In some implementations, the wire grooves 63 are disposed at two ends of the vertical plate 62 in the width direction of the battery pack 3, the wire groove 63 is disposed on the bottom plate 61, the first part 721 passes through the wire groove 63 on the bottom plate 61, and the second part 722 passes through the wire groove 63 on the vertical plate 62. The wire grooves 63 are disposed, so that both the first part 721 and the second part 722 can be stably disposed on the isolation member 60.

In some embodiments, the module structure 8 further includes a fuse 80, and the fuse 80 is connected to the first conducting wire 71 or the second conducting wire 72. Therefore, in a scenario in which a system is faulty, or the battery pack 3 itself is faulty (for example, short-circuited), the fuse 80 may be used to implement rapid disconnection, to ensure safety of the battery pack 3 in a whole life cycle including manufacturing, transportation, compartment storage, maintenance, and operation.

In some implementations, the fuse 80 is disposed in the power distribution compartment 102. Therefore, a risk of an electric spark caused by condensation at the fuse 80 can be reduced by using a separation function of the isolation member 60.

In some implementations, the fuse 80 is disposed on the bottom plate 61, and the fuse 80 is connected to the first part 721. Because the span of the second conducting wire 72 is long, it can be convenient for a connection between the second conducting wire 72 and the fuse 80. In addition, because the first part 721 is disposed on the bottom plate 61, the fuse 80 may also be conveniently disposed on the bottom plate 61, to improve connection stability of the fuse 80.

In some implementations, in the width direction of the battery pack 3, that is, in the length direction of the isolation member 60, the power board 40 and the fuse 80 are spaced apart. Because both the fuse 80 and the power board 40 have large volumes, space of the power distribution compartment 102 can be properly used, and a size of the power distribution compartment 102 is effectively reduced in the first direction L, to facilitate miniaturization of the battery pack 3.

It may be understood that in some other implementations, the fuse 80 may alternatively be disposed outside the battery pack 3 and disposed on a conducting wire connected to an adjacent battery pack 3. Similarly, in the scenario in which the system is faulty, or the battery pack 3 itself is faulty (for example, short-circuited), rapid disconnection may be implemented by using the fuse 80.

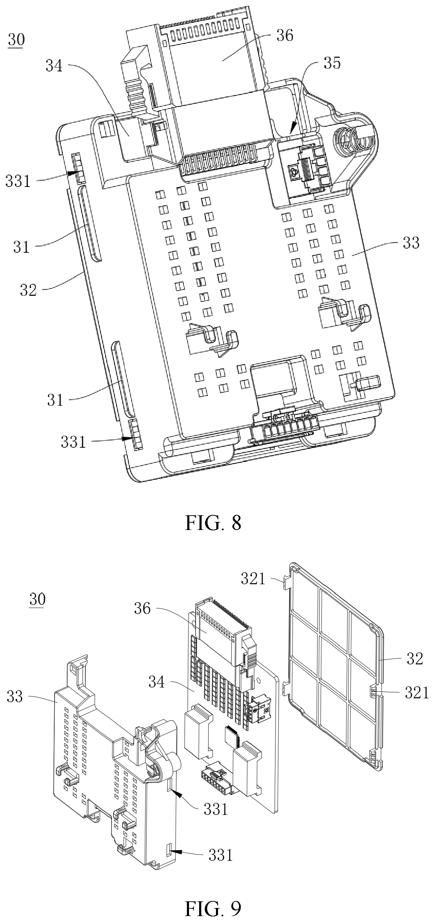

FIG. 8 is a diagram of a structure of the battery management unit 30 of the battery pack 3 in the embodiment in FIG. 2. FIG. 9 is a schematic exploded view of the battery management unit 30 in FIG. 8.

Refer to FIG. 8 and FIG. 9. In some embodiments, the battery management unit 30 includes a bottom housing 32, a cover body 33, and a sampling board 34. The cover body 33 and the bottom housing 32 are connected in a snap-fit 321 manner and enclose an accommodation cavity 35, and the sampling board 34 is located in the accommodation cavity 35. In this embodiment, because the bottom housing 32 is connected to the cover body 33 in a snap-fit 321 manner, convenience of a connection between the bottom housing 32 and the cover body 33 can be improved. The sampling board 34 is disposed in the accommodation cavity 35 enclosed by the bottom housing 32 and the cover body 33, so that proper protection for the sampling board 34 can be improved, to prevent the sampling board 34 from being short-circuited with another electronic component, for example, a conducting wire.

In some implementations, a snap-fit 321 is disposed on a periphery of the bottom housing 32, a snap-fit slot 331 is disposed on a periphery of the cover body 33, and the bottom housing 32 and the cover body 33 are connected by using the snap-fit 321 and the snap-fit slot 331.

In some implementations, both the bottom housing 32 and the cover body 33 are made of non-conductive materials, to avoid short-circuiting with the sampling board 34.

Refer to FIG. 6, FIG. 8, and FIG. 9. In some implementations, the bottom housing 32 is disposed in the assembly recess 621, and the cover body 33 is connected to the isolation member 60 in a snap-fit 321 manner. The cover body 33 is connected to the isolation member 60 in a snap-fit manner, and the bottom housing 32 is disposed in the assembly recess 621, so that it can be ensured that the bottom housing 32 and the sampling board 34 located in the accommodation cavity 35 are stably connected to the isolation member 60.

Specifically, the snap-fit portion 31 is disposed on the cover body 33 to facilitate snap-fitting between the snap-fit portion and the mating portion 65 on the isolation member 60.

It may be understood that in some other implementations, the bottom housing 32 may alternatively be connected to the isolation member 60 in a snap-fit manner, for example, the snap-fit portion 31 is disposed on the bottom housing 32 to be snap-fitted to the mating portion 65 on the isolation member 60. Alternatively, the bottom housing 32 may be connected to the cover body 33 in a snap-fit manner, but the bottom housing 32 or the cover body 33 is fastened to the isolation member 60 by using a bolt or a screw. Alternatively, the bottom housing 32 may be fastened to the cover body 33 by using a bolt or a screw, but the bottom housing 32 or the cover body 33 is connected to the isolation member 60 in a snap-fit manner.

It may be understood that in some other implementations, the sampling board 34 may alternatively be directly fastened to the isolation member 60, for example, disposed in the assembly recess 621 of the isolation member 60, and then connected to the isolation member 60 through the cover body 33, and the assembly recess 621 is covered to accommodate the sampling board 34. In this way, the bottom housing 32 can be omitted, and not only costs can be reduced, but also space can be saved. This facilitates miniaturization of the battery pack 3.

FIG. 10 is a partial enlarged diagram at position A in FIG. 3.

Refer to FIG. 3 and FIG. 10. In some embodiments, the battery pack 3 further includes a first connection terminal 51 connected to the flexible circuit board, the battery management unit 30 further includes a second connection terminal 36 connected to the sampling board 34, and the first connection terminal 51 is connected to the second connection terminal 36, so that the flexible circuit board 50 is electrically connected to the sampling board 34. In addition, a manner in which the first connection terminal 51 and the second connection terminal 36 are connected to the flexible circuit board 50 and the sampling board 34 can effectively reduce connection difficulty and improve connection efficiency.

In some implementations, the flexible circuit board 50 is located between the battery module 20 and the top wall 124 of the housing 10, to facilitate electrical connection to the cell 21 of the battery module 20. The flexible circuit board extends in the first direction L, to facilitate convenient electrical connection to all cells 21 of the battery module 20.

In some implementations, the first connection terminal 51 is connected to an end that is of the flexible circuit board 50 and that faces the isolation member 60, and the second connection terminal 36 is connected to an end that is of the sampling board 34 and that faces the top wall 124 of the housing 10, to help reduce a distance between the first connection terminal 51 and the second connection terminal 36, so as to facilitate the connection between the first connection terminal 51 and the second connection terminal 36.

Specifically, the flexible circuit board 50 extends beyond the vertical plate 62 in the first direction L, and the first connection terminal 51 is connected to a part that is of the flexible circuit board 50 and that exceeds the vertical plate 62 in the first direction L. The battery management unit 30 corresponds to the flexible circuit board 50 in the height direction of the battery pack 3, to facilitate the connection between the first connection terminal 51 and the second connection terminal 36. In addition, the flexible circuit board 50 does not need to exceed the vertical plate 62 in the first direction L for too long.

It may be understood that, when there are a plurality of battery modules 20, there are also a plurality of flexible circuit boards 50 and battery management units 30 correspondingly, and in the height direction of the battery pack 3, each flexible circuit board 50 corresponds to one battery management unit 30 disposed on the isolation member 60.

FIG. 11 is a partial enlarged diagram at position B in FIG. 3.

Refer to FIG. 2 and FIG. 11. In some embodiments, a spacing is disposed between the isolation member 60 and the top wall 124 of the housing 10, so that a part of a structure may extend to an area between the isolation member 60 and the top wall 124 during assembly, to improve space utilization in the housing 10 and facilitate miniaturization of the battery pack 3. For example, a busbar 7 connected to the battery module 20, and the positive connector 22 and the negative connector 23 of the battery module 20 may all be disposed in an area between the isolation member 60 and the top wall 124 of the housing 10, and the flexible circuit board 50 may further pass through the area between the isolation member 60 and the top wall 124 of the housing 10 to be connected to the battery management unit 30.

When the battery pack 3 undergoes thermal runaway, there is still a small amount of electrolyte sprayed to the power board 40, the battery management unit 30, the copper bar, and the like from the spacing between the isolation member 60 and the top wall 124 of the housing 10. Therefore, there is still a risk of an electric spark of the power board 40, the battery management unit 30, the copper bar, and the like. To avoid the electric spark of the power board 40, the battery management unit 30, the copper bar, and the like caused by the electrolyte being sprayed to the power distribution compartment 102, in some embodiments, the battery pack 3 further includes a foam strip 90 disposed between the battery module 20 and the top wall 124 of the housing 10, so that the area between the isolation member 60 and the top wall 124 of the housing 10 is filled with the foam strip 90. Therefore, the electrolyte sprayed out from the cell 21 of the battery module 20 basically can be completely prevented from being sprayed to the power distribution compartment 102, so that an electric spark of the electronic component (such as the power board 40, the battery management unit 30, or the copper bar) located in the power distribution compartment 102 can be avoided.

In some implementations, the foam strip 90 is disposed between the battery module 20 and the top wall 124 of the housing 10, and in the height direction of the battery module 20, the foam strip 90 basically corresponds to a location of the isolation member 60 or the end plate 25 of the battery module 20, so that the foam strip 90 can effectively isolate the electrolyte sprayed out from the cell 21 of the battery module 20 from being sprayed to the power distribution compartment 102.

In some implementations, the foam strip 90 is in a strip shape, and an extension direction of the foam strip 90 is the same as the extension direction of the isolation member 60.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A battery pack, wherein the battery pack comprises a housing, and an isolation member, a battery module, and a battery management unit that are built in the housing, the battery management unit is disposed on the isolation member, the isolation member is fastened in the housing and separates space in the housing into a battery compartment and a power distribution compartment that are distributed in a first direction, the battery management unit is located in the power distribution compartment, the battery module is located in the battery compartment, and the battery management unit is electrically connected to the battery module.

2. The battery pack according to claim 1, wherein the isolation member comprises a bottom plate and a vertical plate that is integrally formed with the bottom plate, the vertical plate separates the space in the housing into the battery compartment and the power distribution compartment, the bottom plate is fastened to a base of the housing, the bottom plate is located on a side that is of the vertical plate and that is away from the battery module, and the battery management unit is assembled on the side that is of the vertical plate and that is away from the battery module.

3. The battery pack according to claim 1, wherein an assembly recess is disposed on a side that is of the isolation member and that is away from the battery module, and the battery management unit is mounted in the assembly recess.

4. The battery pack according to claim 3, wherein the battery management unit comprises a bottom housing, a cover body, and a sampling board, the cover body and the bottom housing are connected in a snap-fit manner and enclose an accommodation cavity, the sampling board is located in the accommodation cavity, the bottom housing is disposed in the assembly recess, and the cover body is connected to the isolation member in a snap-fit manner.

5. The battery pack according to claim 4, wherein the battery pack further comprises a flexible circuit board and a first connection terminal, the flexible circuit board is located between the battery module and a top wall of the housing and is electrically connected to a cell of the battery module, the flexible circuit board extends in the first direction, a part of the flexible circuit board extends into the power distribution compartment, and the first connection terminal is connected to the part that is of the flexible circuit board and that extends into the power distribution compartment; and
the battery management unit further comprises a second connection terminal connected to the sampling board, and the first connection terminal is connected to the second connection terminal.

6. The battery pack according to claim 1, wherein the battery pack further comprises a positive external interface and a negative external interface, the battery pack further comprises a first conducting wire configured to connect the positive external interface to a positive connector of the battery module, and a second conducting wire configured to connect the negative external interface to a negative connector of the battery module, and the first conducting wire and the second conducting wire are disposed on the isolation member and are located in the power distribution compartment.

7. The battery pack according to claim 6, wherein the isolation member comprises a bottom plate and a vertical plate integrally formed with the bottom plate, the vertical plate separates the space in the housing into the battery compartment and the power distribution compartment, the bottom plate is fastened to a base of the housing, the bottom plate is located on a side that is of the vertical plate and that is away from the battery module, the second conducting wire comprises a first part extending in a width direction of the battery pack and a second part extending from an end portion of the first part in a height direction of the battery pack, the first part is disposed on the bottom plate, and the second part is disposed on the vertical plate.

8. The battery pack according to claim 7, wherein wire grooves are disposed at two ends of the vertical plate in the width direction of the battery pack, a wire groove is disposed on the bottom plate, the first part passes through the wire groove on the bottom plate, and the second part passes through the wire groove on the vertical plate.

9. The battery pack according to claim 6, wherein the battery pack further comprises a fuse disposed on the isolation member, and the fuse is connected to the first conducting wire or the second conducting wire.

10. The battery pack according to claim 1, wherein the battery pack further comprises a power board configured to control the battery module, and the power board is disposed in the power distribution compartment.

11. The battery pack according to claim 10, wherein the housing comprises a front wall and a rear wall that are opposite to each other in the first direction, the isolation member is located between the battery module and the front wall, and the power board is disposed on a side that is of the front wall and that faces the isolation member.

12. The battery pack according to claim 1, wherein the battery module comprises a plurality of cells arranged in the first direction, the isolation member is in a strip shape, the isolation member extends in a width direction of the battery pack, and the first direction is consistent with a length direction of the battery pack.

13. The battery pack according to claim 1, wherein in a width direction of the battery pack, two ends of the isolation member protrude from two ends of the battery module.

14. The battery pack according to claim 1, wherein a spacing is reserved between the isolation member and a top wall of the housing, the battery pack further comprises a foam strip, in a height direction of the battery pack, the foam strip is disposed in a spacing area between the top wall of the housing and the isolation member, and the height direction of the battery pack is perpendicular to the first direction.

15. An energy storage apparatus, comprising a cabinet and a plurality of battery packs according to any one of claims 1 to 14, wherein the plurality of battery packs are stacked in the cabinet.
